# EUROPEAN PATENT APPLICATION

(11) **EP 4 831 426 A1**
(43) Date of publication of application: **28.10.2026**
(21) Application number: 24914710.9
(22) Date of filing: 01.02.2024
(51) Int. Cl.: E04H 4/16, G01B 7/00, B01D 35/02

(54) **WATER CLEANING ROBOT**

(30) Priority: 05.01.2024 WO PCT/CN2024/070977
(71) Applicant: Aiper Global Pte. Ltd., Singapore 409051 (SG)
(72) Inventor: WANG, Yang, Shenzhen, Guangdong 518000 (CN)
(74) Representative: Osterhoff, Utz
(86) International application number: PCT/CN2024/075195
(87) International publication number: WO 2025/145483

(57) **Abstract**

A water cleaning robot includes a main body (1), a sewage discharge channel provided in the main body (1), a negative pressure generating device (66) provided in the sewage discharge channel, a suction port (12) located at a bottom of the main body (1) and provided at one end of the sewage discharge channel, and a discharge port (101) located at a top of the main body (1) and provided at another end of the sewage discharge channel. A traveling wheel (8), an elastic pressing assembly (81) configured to press the traveling wheel (8) downward, and a sensor configured to detect a motion state of the traveling wheel (8) are further provided at the bottom of the main body (1). The water cleaning robot controls a cleaning strategy and changes a cleaning path according to the motion state of the traveling wheel, thereby achieving safer and more efficient cleaning operations.

## Description

### TECHNICAL FIELD

The present application relates to the technical field of cleaning robots, and in particular to a water cleaning robot.

### BACKGROUND

In the related art, water cleaning robots used for pool cleaning typically use only a single filter basket to filter out sucked-in debris and dirt. A filter basket having smaller openings can remove smaller impurities and dirt and provide more thorough cleaning, but larger debris may clog the filter basket, create significant water-flow resistance, and require frequent cleaning, which is inconvenient and inefficient. Conversely, a filter basket having larger openings may not ensure an effective cleaning result. In addition, existing filter baskets and other filter devices are difficult to clean. Therefore, existing water cleaning robots need to be improved to address problems such as low cleaning efficiency, poor cleaning results, and frequent disassembly and cleaning of the filter basket.

### SUMMARY

The present application provides a water cleaning robot with multistage filtration that, in some embodiments, improves cleaning efficiency of existing water cleaning robots.

To achieve the above objectives, a water cleaning robot according to the present application includes a main body, a sewage discharge channel provided inside the main body, a negative pressure generating device provided in the sewage discharge channel, a suction port located at a bottom of the main body and provided at one end of the sewage discharge channel, and a discharge port located at a top of the main body and provided at another end of the sewage discharge channel. The bottom of the main body further includes a traveling wheel, an elastic pressing assembly configured to press the traveling wheel downward, and a sensor configured to detect a motion state of the traveling wheel.

Compared with the related art, the present application has the following advantages. The obstacle monitoring mechanism is applicable to various adaptive cleaning apparatuses, including cleaning robots, and detects whether an obstacle or a wall is encountered. In combination with detection results of sensors of the obstacle monitoring mechanism, intelligent path planning of the cleaning robot can be achieved, so that the cleaning robot can perceive a surrounding environment in multiple directions, obstacle detection accuracy and reliability are improved, and safer and more efficient cleaning operation is achieved. The roller brush cleaning mechanism can better lift dirt and debris on a surface to be cleaned and quickly draw the dirt and debris into the robot through a smooth suction path.

### BRIEF DESCRIPTION OF THE DRAWINGS

The present application will be described in detail below with reference to embodiments and the accompanying drawings.
FIG. 1 is a top perspective structural schematic view of the water cleaning robot according to an embodiment of the present application.
FIG. 2 is a bottom perspective structural schematic view of the water cleaning robot according to an embodiment of the present application.
FIG. 3 is an exploded structural schematic view of the water cleaning robot according to an embodiment of the present application.
FIG. 4 is a structural schematic view of the water cleaning robot with a top shell omitted according to an embodiment of the present application.
FIG. 5 is a perspective structural schematic view of a filter device according to an embodiment of the present application.
FIG. 6 is an exploded view of the filter device from a rear side according to an embodiment of the present application.
FIG. 7 is an exploded view of the filter device from a front side according to an embodiment of the present application.
FIG. 8 is a schematic view of a mounting structure of a handle and a flip cover according to another embodiment of the present application.
FIG. 9 is a perspective schematic view of a cover latch module according to an embodiment of the present application.
FIG. 10 is a front sectional structural schematic view of the water cleaning robot according to an embodiment of the present application.
FIG. 11 is a schematic view of a transmission structure of a roller brush and a drive device on a side of a gear set according to an embodiment of the present application.
FIG. 12 is an exploded structural schematic view of the drive device and a negative pressure generating device according to an embodiment of the present application.
FIG. 13 is an exploded structural schematic view of an impeller and guide vanes according to an embodiment of the present application.
FIG. 14 is an exploded structural schematic view of a bottom shell and a traveling wheel from a bottom perspective according to an embodiment of the present application.
FIG. 15 is a schematic view showing relative positions of the drive device and the traveling wheel from one perspective according to an embodiment of the present application.
FIG. 16 is a schematic view showing relative positions of the drive device and the traveling wheel from another perspective according to an embodiment of the present application.
FIG. 17 is a partial exploded structural schematic view of the bottom shell and the traveling wheel from a top perspective according to an embodiment of the present application.
FIG. 18 is a top view of the bottom shell according to an embodiment of the present application.
FIG. 19 is a cross-sectional structural schematic view taken along line A-A in FIG. 18.
FIG. 20 is a structural schematic view of an embodiment using a traveling wheel as a driven wheel.
FIG. 21 is an exploded schematic view of a transmission structure of the drive device on a side of the traveling wheel.
FIG. 22 is an exploded structural schematic view of the roller brush from one direction.
FIG. 23 is a side sectional structural schematic view of the water cleaning robot.
FIG. 24 is an exploded schematic view of a transmission relationship among the drive device, the driving wheel and the roller brush.
FIG. 25 is an exploded structural schematic view of the roller brush from another direction.

### DETAILED DESCRIPTION OF THE EMBODIMENTS

The technical solutions of the embodiments of the present application are described below clearly and completely with reference to the accompanying drawings. The embodiments shown in the accompanying drawings are exemplary, and the same reference numerals throughout the drawings indicate the same components or components having the same functions. The embodiments described below with reference to the accompanying drawings are exemplary, are used only to explain the present application, and should not be construed as limiting the present application.

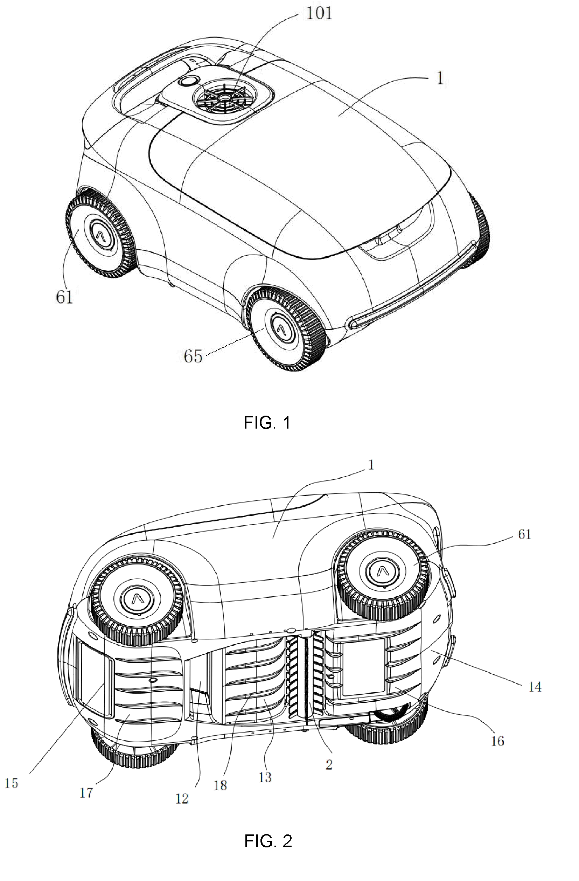

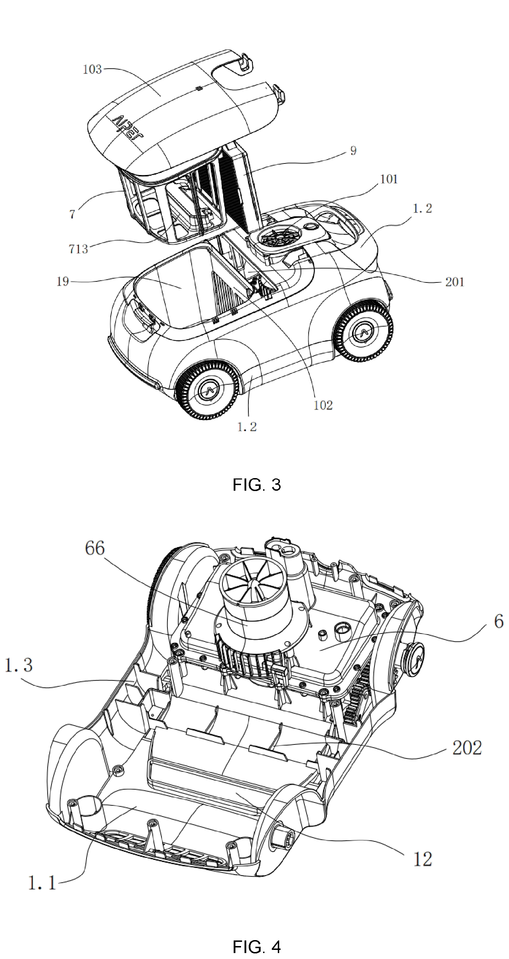

The present application provides a water cleaning robot. Referring to FIG. 1 to FIG. 3, the water cleaning robot mainly includes a main body 1, a filter mechanism, an obstacle monitoring mechanism and a roller brush cleaning mechanism. The filter mechanism is provided in the main body 1 and includes a sewage discharge channel. A negative pressure generating device 66 is provided in the sewage discharge channel. One end of the sewage discharge channel is a suction port 12, and another end of the sewage discharge channel is a discharge port 101. Multiple stages of filter devices are sequentially provided in the sewage discharge channel near the suction port 12. The negative pressure generating device 66 generates negative pressure to draw water containing debris and dirt into the sewage discharge channel, the debris and dirt are retained in the robot, and clean water is discharged, thereby cleaning a water body. The obstacle monitoring mechanism is applicable to various adaptive cleaning apparatuses, including cleaning robots, and senses whether an obstacle or a wall is encountered. In combination with detection results of sensors of the obstacle monitoring mechanism, intelligent path planning of the cleaning robot is achieved, so that the cleaning robot can perceive a surrounding environment in multiple directions, accuracy and reliability of obstacle detection are improved, and safer and more efficient cleaning operation is achieved. The roller brush cleaning mechanism can better lift dirt and debris on a surface to be cleaned and quickly draw the dirt and debris into the robot through a smooth suction path.

In a specific embodiment, the main body 1 includes a bottom shell 1.1 and a top shell 1.2. The bottom shell 1.1 and the top shell 1.2 are assembled and fixed to form a hollow and sealed housing, namely the main body 1. The suction port 12 is provided at the bottom of the bottom shell 1.1, and the discharge port 101 is provided at the top of the top shell 1.2. An interior of the main body 1 is divided into two chambers, namely a first mounting groove 19 and a second mounting groove 20. The two chambers are separated by a partition 102, and a through hole is provided in the partition 102 to communicate the two chambers. The suction port 12 is provided at the bottom of the first mounting groove 19, and the discharge port 101 is provided at the top of the second mounting groove 20. A flow path from the first mounting groove 19 to the second mounting groove 20 forms the sewage discharge channel.

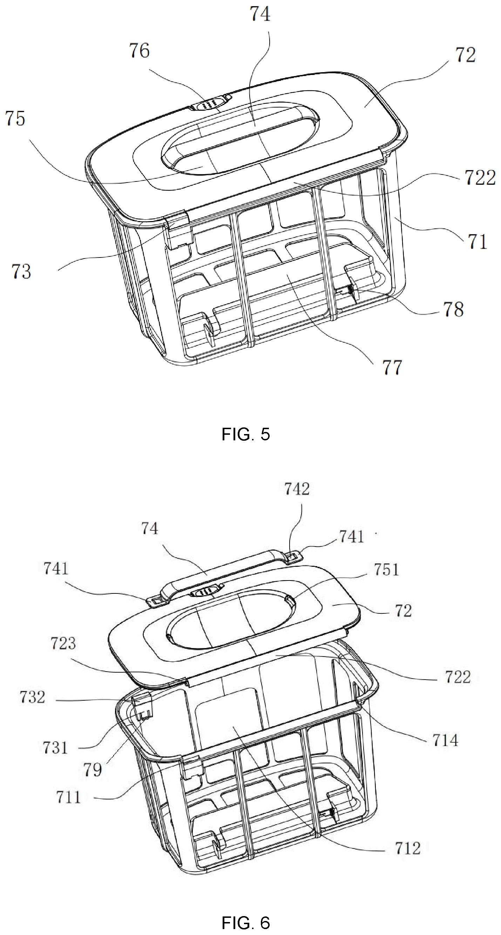

As shown in FIG. 5 to FIG. 7, the filter device 7 includes two main components, namely a filter basket 71 and a flip cover 72. The filter basket 71 is used for filtering. An inlet 713 is provided on the filter basket 71, and a filter screen is provided on a surface of the filter basket 71. Fluid that may carry dirt enters an interior of the filter basket 71 through the inlet 713. The filter screen intercepts dirt and other contaminants in the filter basket 71, and the fluid flows out of the filter basket 71. One surface of the filter basket 71 has an opening 712, and the flip cover 72 is provided at the opening 712 to cover the opening 712. Opening the flip cover 72 facilitates cleaning of the dirt in the filter basket 71. The flip cover 72 and the filter basket 71 are pivotally connected and locked by a rotary locking structure.

In an embodiment, a baffle 77 is provided at the inlet 713. The baffle 77 is provided inside the inlet 713, is hinged to the filter basket 71, and abuts against the inlet 713. The baffle 77 functions as a gate plate for the inlet 713. Because the baffle 77 abuts against an inner side of the inlet 713, the baffle 77 can open only toward the inside of the filter basket 71. An elastic reset member 78 is further provided between the baffle 77 and the filter basket 71. The elastic reset member 78 may include, but is not limited to, a torsion spring or a spring. One end of the elastic reset member 78 is connected to the bottom of the filter basket 71, and another end is connected to the baffle 77. Elasticity of the elastic reset member 78 acts on the baffle 77 so that the baffle 77 abuts against the inlet 713. Therefore, the inlet 713 is normally in a closed state. Only when negative pressure is generated does the baffle 77 turn inward and open. After the negative pressure disappears, the elastic reset member 78 acts to press the baffle 77 against the inner side of the inlet 713, thereby preventing dirt from flowing back.

In an embodiment, the rotary locking structure includes a detachable locking module 73, which assists in assembling the flip cover 72 and the filter basket 71. Specifically, a pair of shaft holes 714 are provided on one side of the opening 712 of the filter basket 71, and the two shaft holes 714 are coaxial. A rotating shaft 722 is provided on one side of the flip cover 72 and is integrally formed with the flip cover 72. During installation of the flip cover 72, the rotating shaft 722 of the flip cover 72 is preassembled with the shaft holes 714. This preassembly only positions the flip cover 72 and the shaft holes 714, and the assembly relationship is not stable. The rotating shaft 722 can be disengaged from the shaft holes 714. Then, the locking module 73 is mounted. The locking module 73 is engaged with and fixed to both the rotating shaft 722 and the filter basket 71. The locking module 73 serves as a connecting member to lock and limit the rotating shaft 722 of the flip cover 72 relative to the filter basket 71. In this way, the rotating shaft 722 is completely limited in the shaft holes 714 and does not come off, thereby ensuring stable assembly of the flip cover 72 and the filter basket 71. By using one locking module 73 to connect the flip cover 72 and the filter basket 71, many unnecessary parts can be omitted, and screw fastening is no longer required, so that the structure is greatly simplified and disassembly and assembly of the flip cover 72 and the filter basket 71 are more convenient.

In a first embodiment, as shown in FIG. 5 and FIG. 6, the locking module 73 specifically includes a first buckle 731 and a limiting block 732. A first slot 711 is provided on the filter basket 71, and the first slot 711 is adapted to the first buckle 731. During installation, the first buckle 731 is inserted into the first slot 711, and assembly is completed by cooperation between a snap-fit portion 79 provided on the first buckle 731 and the first slot 711. The limiting block 732 is correspondingly provided with the shaft hole 714 described above, and the shaft hole 714 is adapted to the rotating shaft 722 on the flip cover 72. The rotating shaft 722 can be fixed by the shaft hole 714 on the limiting block 732, and the locking module 73 is then snapped and fixed to the filter basket 71 by the first buckle 731. In this way, the rotating shaft 722 is fixed on the filter basket 71, thereby facilitating quick assembly and disassembly of the filter basket 71 and the flip cover 72.

Specifically, a cylindrical protrusion 723 is provided at an end of the rotating shaft 722. A size of the protrusion 723 is smaller than a size of the rotating shaft 722. The protrusion 723 is adapted to the shaft hole 714, thereby limiting a relative position of the locking module 73 on the rotating shaft 722 and ensuring that the locking module 73 is aligned with the first slot 711 without excessive adjustment.

In an embodiment, the filter basket 71 is provided with one locking module 73. The limiting block 732 of the locking module 73 is provided with one shaft hole 714, and a body of the filter basket 71 is provided with another shaft hole 714. In this way, during installation, it is only necessary to align the rotating shaft 722 with the shaft hole 714 of the body of the filter basket 71 and then mount the locking module 73 on another end of the rotating shaft 722, so as to ensure a rotational connection between the rotating shaft 722 and the shaft holes 714. Then, the locking module 73 is inserted into and fixed in the first slot 711, thereby fixing the locking module 73 to the filter basket 71.

Another optional implementation of the first embodiment is as follows. The filter basket 71 is provided with two locking modules 73, and each locking module 73 has a shaft hole 714 on its limiting block 732. The body of the filter basket 71 is not provided with a shaft hole 714. During installation, the two locking modules 73 are respectively mounted on two ends of the rotating shaft 722 and then respectively mounted into corresponding first slots 711 of the filter basket 71, thereby achieving quick installation of the filter basket 71 and the flip cover 72.

In a second embodiment, the locking module 73 also includes a first buckle 731 and a limiting block 732. A first slot 711 is provided on the filter basket 71, and the first slot 711 is fitted with the first buckle 731. During installation, the first buckle 731 is inserted into the first slot 711, and assembly is completed by engagement between the snap-fit portion 79 on the first buckle 731 and the first slot 711. Different from the first embodiment, in this embodiment, the limiting block 732 is provided with a semicircular groove, and the filter basket 71 is also provided with a semicircular groove. The two semicircular grooves face each other to form a complete shaft hole 714. The limiting block 732 limits the rotating shaft 722 in the shaft hole 714 by pressing. The rotating shaft 722 is first inserted into a groove half of the filter basket 71, and then the locking module 73 is fixed to the filter basket 71 by the first buckle 731. In this way, the rotating shaft 722 is fixed on the filter basket 71.

The locking module 73 has a snap-fit portion at an end of the first buckle 731 away from the limiting block 732, and the snap-fit portion cooperates with the first slot 711 to fix the locking module 73. When the flip cover 72 needs to be removed, the snap-fit portion of the first buckle 731 is pressed to disengage the first buckle 731 from the first slot 711, so that the first buckle 731 is pulled out and the locking module 73 is removed. Then, the locking module 73 is separated from the rotating shaft 722 at one end of the flip cover 72, and the rotating shaft 722 at another end of the flip cover 72 is removed from the shaft hole on the filter basket 71. The flip cover 72 can then be directly removed from the filter basket 71.

Furthermore, a detachable handle 74 is provided on the top of the flip cover 72, thereby facilitating removal of the filter device 7 from the cleaning robot. A recess 75 is provided on a side of the flip cover 72 opposite to the handle 74, thereby providing clearance for the handle 74 and making the handle 74 easier to hold.

To facilitate installation of the handle 74 and the flip cover 72, slots 751 are provided at two ends of the recess 75, and inserts 741 are also provided at two ends of the handle 74. The inserts 741 are snapped into the slots 751, thereby achieving quick installation of the handle 74 and the flip cover 72. The inserts 741 and the slots 751 are snapped and fixed by a first snap-fit component or a second snap-fit component, so that additional parts are avoided and installation steps are reduced.

As one embodiment of the handle 74, as shown in FIG. 5 and FIG. 6, the insert 741 is provided with an elastic retaining plate 742. The elastic retaining plate 742 is engaged with a side of the flip cover 72 opposite to the handle 74, that is, the insert 741 is engaged and fixed to a back side of the flip cover 72. One end of the elastic retaining plate 742 is fixedly connected to the insert 741, and the elastic retaining plate 742 is inclined relative to the insert 741. When the insert 741 is inserted into the slot 751, the elastic retaining plate 742 is compressed and deformed. After the insert 741 is fully inserted into the slot 751, the elastic retaining plate 742 quickly resets and is engaged with one side of the flip cover 72.

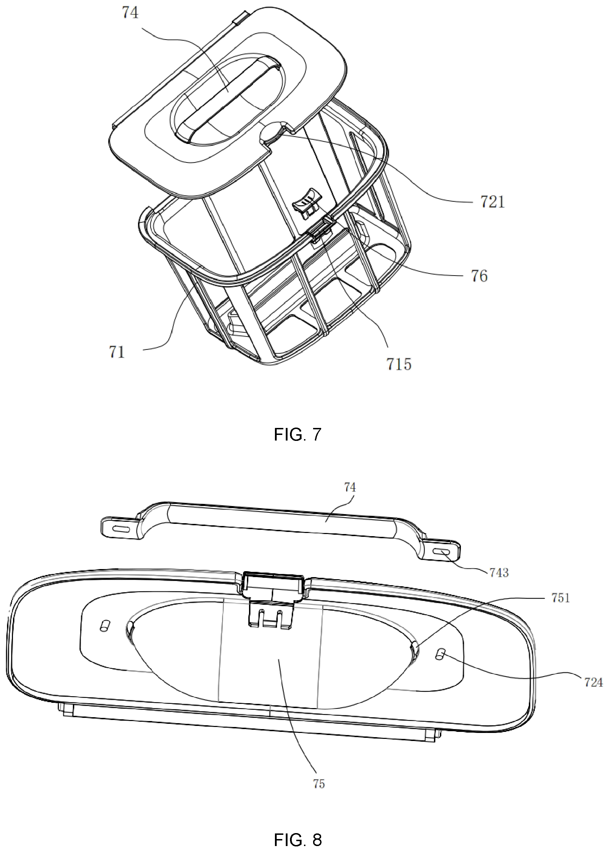

As another possible embodiment of the handle 74, as shown in FIG. 8, the insert 741 is provided with a locking hole 743, and the flip cover 72 is provided with a locking post 724 on a side opposite to the handle 74. After the insert 741 is inserted into the slot 751, the locking post 724 is provided in the locking hole 743 to lock and fix the handle 74 on the flip cover 72.

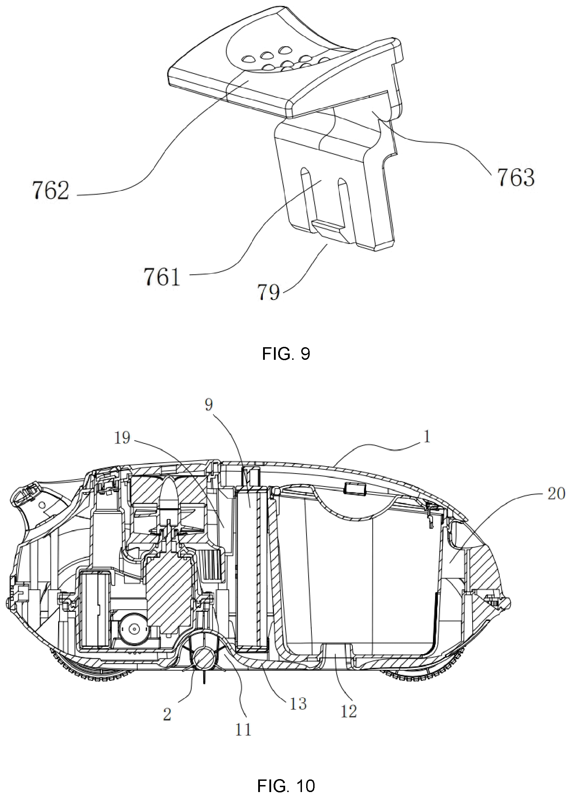

Furthermore, as shown in FIG. 7 and FIG. 9, the filter device 7 further includes the cover latch module 76 to prevent the flip cover 72 from automatically flipping open. The cover latch module 76 is located on a side of the opening 712 of the filter basket 71 opposite to the shaft holes 714 or the rotating shaft 722. The flip cover 72 is provided with a latch portion 721, and the latch portion 721 is engaged with the cover latch module 76 to fix the filter basket 71 and the flip cover 72.

Referring to FIG. 9, the cover latch module 76 specifically includes a second buckle 761, a pressing plate 762 and a support plate 763. The filter basket 71 is provided with a second slot 715, which is located on a side opposite to the rotating shaft 722 and is adapted to the second buckle 761. The pressing plate 762 is used to engage with the latch portion 721. The support plate 763 is elastic and connects the second buckle 761 and the pressing plate 762, so that the cover latch module 76 has a certain elasticity. The cover latch module 76 is quickly assembled on the filter basket 71 by inserting the second buckle 761 into the second slot 715. The support plate 763 provides elastic support, so that the pressing plate 762 can elastically reset after being pressed. In a normal state, the pressing plate 762 is engaged with the latch portion 721. When the pressing plate 762 is pressed, the latch portion 721 is released from limitation, and the flip cover 72 can be flipped open normally.

In this embodiment, the pressing plate 762 and the second buckle 761 are substantially perpendicular to each other. One end of the pressing plate 762 is connected to the support plate 763, and this end of the pressing plate 762 protrudes by a certain length to be engaged with the latch portion 721. Another end of the pressing plate 762 extends in a direction substantially perpendicular to the second buckle 761. The pressing plate 762 extends by a certain length toward an outside of the filter basket 71. A surface of the pressing plate 762 is provided with an arc-shaped concave surface and protrusions on the concave surface, thereby facilitating finger pressing.

At a lower side of the second buckle 761, three plates are provided, and a snap-fit portion 79 is further provided at a lower end of the middle plate. The snap-fit portion 79 is engaged with the second slot 715 of the filter basket 71. The second buckle 761 is inserted into the second slot 715, so that the snap-fit portion 79 is engaged with the second slot 715, thereby fixing the cover latch module 76 to the filter basket 71. Similarly, when disassembly is required, the pressing plate 762 is pressed to release the flip cover 72, and then the second buckle 761 is pressed to disengage the snap-fit portion 79 from the second slot 715, thereby removing the second buckle 761.

In the present application, the filter device has a quick-release structure. A single locking module 73 enables quick disassembly and assembly of the filter basket 71 and the flip cover 72. The cover latch module 76 is snapfitted and fixed to the filter basket 71, and the flip cover 72 is engaged with the cover latch module 76, thereby fixing the flip cover 72 to the filter basket 71. These components enable modular installation of the filter device. In addition, both the locking module 73 and the cover latch module 76 are made of non-metallic materials, so various metal parts are not required to fix the filter basket 71 and the flip cover 72. This avoids rusting problems caused by metal parts and simplifies disassembly and assembly. The modular design also makes production and processing of the filter device more convenient, allows disassembly and modular transportation, facilitates transportation and saves costs.

Furthermore, as shown in FIG. 1, wheels are also provided at the bottom of the main body 1. The wheels are used to drive the main body 1 to move. The wheels specifically include driving wheels 61 and driven wheels 65. The driving wheels 61 are located in a rear half of the main body 1, and the driven wheels 65 are located in a front half of the main body 1. A drive device 6 is provided in the rear half of the main body 1 and is located in the second mounting groove 20. The drive device 6 includes a drive motor. The driving wheels 61 are driven to rotate by the drive device 6. Specifically, the wheels include two driving wheels 61 and two driven wheels 65, so that the main body 1 is driven to move by the driving wheels 61 during movement. The traveling wheel 8 does not undertake traveling drive work of the cleaning robot. The traveling wheel 8 is located between the two driving wheels 61. This arrangement is adopted because the driving wheels 61 are located in the rear half of the main body 1, and the corresponding drive device 6 is also located in the rear half of the main body 1. The drive device 6 is arranged opposite to the driving wheels 61, so that the rear half of the main body 1 is relatively heavy and is less susceptible to buoyancy.

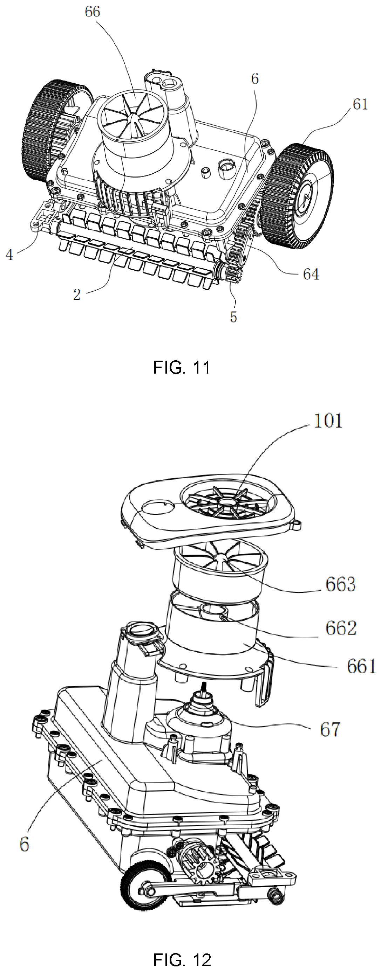

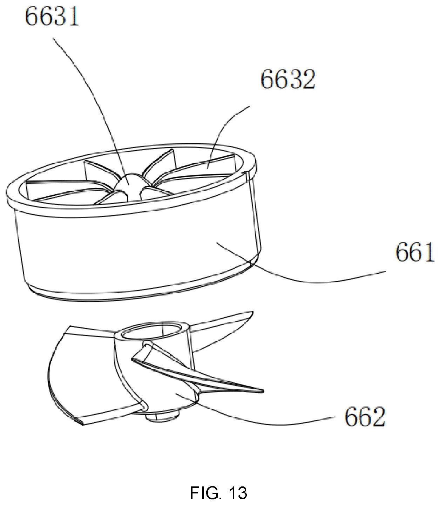

Referring to FIG. 1, FIG. 2, FIG. 3, FIG. 11, FIG. 12 and FIG. 13, the negative pressure generating device 66 includes a guide shroud 661, an impeller 662 and a guide vane 663. The guide shroud 661 is provided in a middle portion of the drive device 6. An upper end of the guide shroud 661 is connected to the discharge port 101, or the upper end of the guide shroud 661 serves as the discharge port 101. A lower end of the guide shroud 661 is connected to the negative pressure generating device 66, and the upper end of the guide shroud 661 is directly bolted to the top shell 1.2. The impeller 662 is located in the middle portion of the guide shroud 661 and is connected to an output shaft 67 of a rotating motor. The water flow filtered by the multiple stages of filter devices is driven by the impeller 662 into the guide shroud 661 and is discharged from the discharge port 101.

Furthermore, the guide vane 663 is provided inside the guide shroud 661 and is located at the discharge port 101 above the impeller 662. The guide vane 663 includes a central shaft 6631 and a plurality of ribs 6632. The central shaft 6631 is bullet-shaped in a direction facing the discharge port 101, and the ribs 6632 are connected between the central shaft 6631 and an inner wall of the guide shroud 661. This design helps pumped water rise vertically and prevents water from escaping around, thereby reducing disturbance to surrounding water during cleaning. The cleaning robot can clean a target water surface in a more concentrated manner, thereby improving cleaning efficiency.

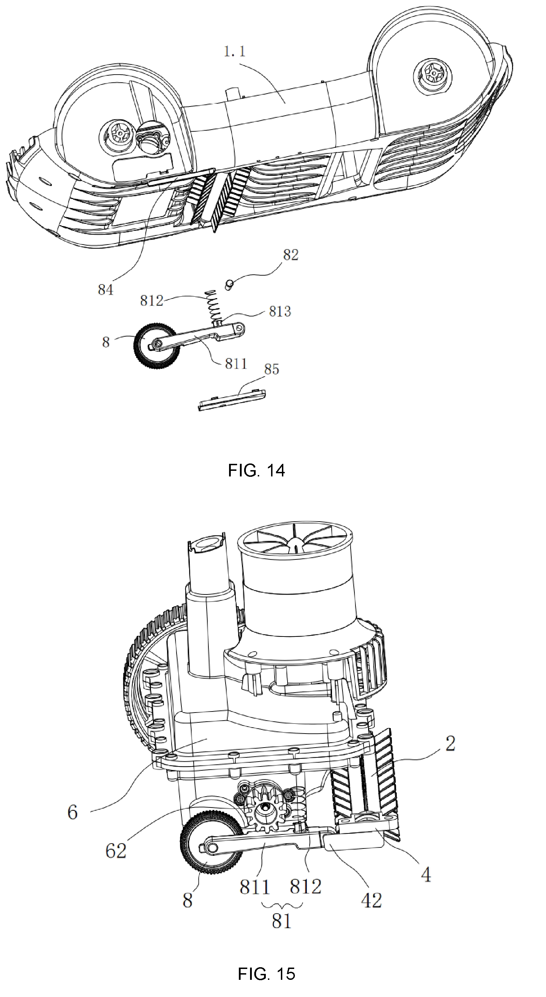

In the present application, as shown in FIG. 1 and FIG. 14, the obstacle monitoring mechanism includes the main body 1, the traveling wheel 8, the elastic pressing assembly 81 and sensors. The main body 1 includes the bottom shell 1.1. The traveling wheel 8 is located at the bottom of the bottom shell 1.1 of the main body 1. To mount the traveling wheel 8, an accommodating space 84 is provided at the bottom of the bottom shell 1.1. The traveling wheel 8 is rotatably mounted in the accommodating space 84. The traveling wheel 8 forms rolling contact with the ground when the cleaning robot travels on the ground. Under action of the elastic pressing assembly 81, the traveling wheel 8 always maintains contact with the ground. The elastic pressing assembly 81 may include a spring, a pneumatic buffer device or another similar structure, so that the traveling wheel 8 can flexibly adapt to height differences and unevenness of the ground. The sensors may include contact sensors, photoelectric sensors, ultrasonic sensors and the like, and are used to monitor a motion state of the traveling wheel 8, including a rotation speed, a direction and whether the traveling wheel 8 is blocked. The sensors transmit real-time motion state data to a control system of the cleaning robot, so as to identify and respond to obstacles in time.

Specifically, referring to FIG. 14 to FIG. 17, the elastic pressing assembly 81 includes a rocker arm 811 and an elastic member 812. The rocker arm 811 is also mounted in the accommodating space 84, and the accommodating space 84 has a certain depth. The rocker arm 811 is hinged to the main body 1 by a pin 82, so that the rocker arm 811 can rotate around a hinge point. The traveling wheel 8 is rotatably mounted on the rocker arm 811 by a shaft, and an axial direction of the pin 82 is substantially parallel to an axial direction of the traveling wheel 8. As the rocker arm 811 rotates around the pin 82, the traveling wheel 8 is driven to move upward and downward. The elastic member 812 is connected between the rocker arm 811 and the main body 1, so that the elastic member 812 generates an elastic force on the rocker arm 811. The elastic force abuts against the rocker arm 811 and provides a downward pressing action. At this time, the rocker arm 811 rotates around the pin 82, so that a portion of the rocker arm 811 carrying the traveling wheel 8 rotates downward, and the traveling wheel 8 maintains continuous contact with the ground.

In a preferred embodiment, one end of the rocker arm 811 is hinged to the main body 1 by the pin 82, and the traveling wheel 8 is mounted at another end of the rocker arm 811. A mounting portion for mounting the elastic member 812 is provided in a middle portion of the rocker arm 811. The mounting portion is located on an upper side of the rocker arm 811. One end of the elastic member 812 is mounted on the mounting portion, and another end is connected to the main body 1. The elastic member 812 provides an elastic force toward the rocker arm 811, so as to ensure continuous downward pressure on the traveling wheel 8.

In other embodiments, the rocker arm 811 is hinged to the main body 1 at a position close to a middle portion of the rocker arm 811. The traveling wheel 8 is also located at one end of the rocker arm 811. The mounting portion is located at another end of the rocker arm 811 relative to the traveling wheel 8, and the mounting portion is located on a lower side of the rocker arm 811. The elastic member 812 is also connected between the mounting portion and the main body 1 to provide a downward pressing action on the end of the rocker arm 811 carrying the traveling wheel 8.

After the rocker arm 811 is connected to the traveling wheel 8 and mounted in the accommodating space 84, an installation opening of the accommodating space 84 is covered by a cover 85. However, the cover 85 only partially covers the accommodating space 84, and the traveling wheel 8 can still extend downward from the accommodating space 84.

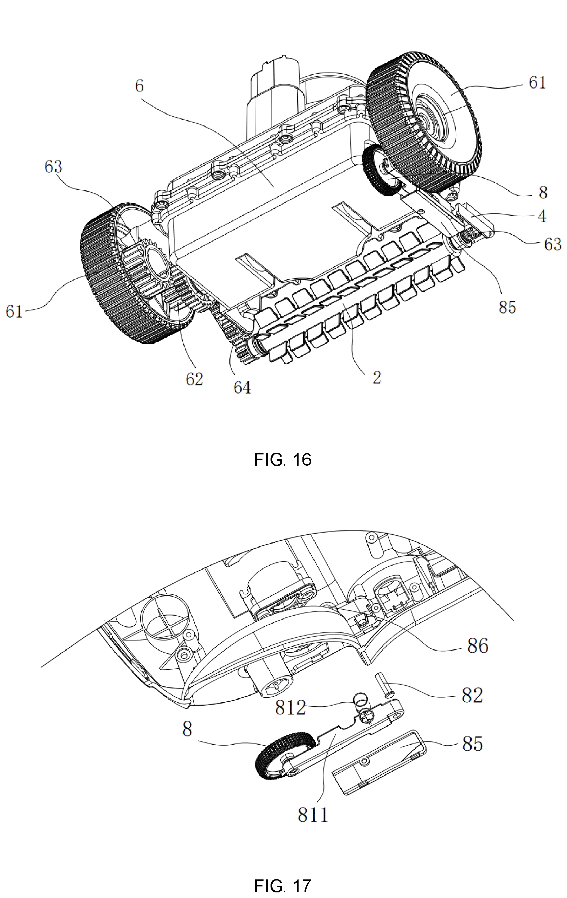

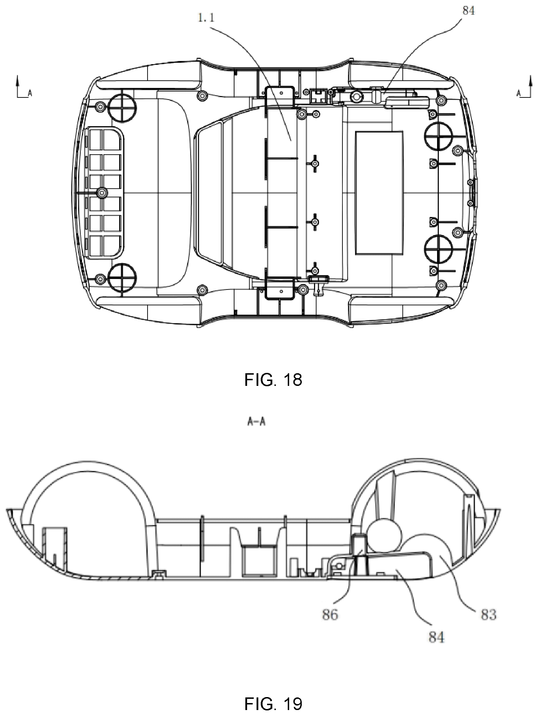

Referring to FIG. 17 to FIG. 19, to ensure that the traveling wheel 8 has sufficient space for upward movement and to prevent the traveling wheel 8 from interfering with other structures in the main body 1 when encountering terrain undulations, a clearance space 83 is provided on the main body 1. The clearance space 83 is located above the traveling wheel 8 to provide clearance and prevent the traveling wheel 8 from being stuck when the robot passes over obstacles. A position of the clearance space 83 can be adjusted according to the internal structure of the main body 1. When the accommodating space 84 is internally enclosed, the clearance space 83 is located inside the accommodating space 84. In this embodiment, the accommodating space 84 is open to the main body 1, so that the traveling wheel 8 can move into the main body 1. The drive device 6 corresponding to the traveling wheel 8 is provided inside the main body 1. To provide sufficient clearance for the traveling wheel 8, the clearance space 83 is located on the drive device 6.

The elastic member 812 may include, but is not limited to, a spring, a torsion spring, a pneumatic buffer device, a hydraulic buffer device and a similar structure. To reduce costs as much as possible, a spring is selected as the elastic member 812 in this embodiment, and a corresponding mounting base 813 is a cross-shaped protrusion. The spring is directly sleeved on the mounting base 813. A circular through groove 86 is provided on the main body 1. The circular through groove 86 communicates with the accommodating space 84, and the spring is mounted in the circular through groove 86 to ensure stable operation of the elastic member 812.

Drive wheels are provided at the bottom of the main body 1 to drive the main body 1 to move. The negative pressure generating device and the sewage discharge channel are provided inside the main body 1. The negative pressure generating device is located in the sewage discharge channel. The suction port 12 is provided at the bottom of the main body 1 and is located at one end of the sewage discharge channel. Another end of the sewage discharge channel is the discharge port, which is located on a surface of the main body 1. At least one set of filter devices is provided in the sewage discharge channel, so that when the cleaning robot operates, dirt on the cleaning surface can be sucked into the sewage discharge channel through the suction port 12. The dirt is intercepted inside the main body 1 by the filter device, while clean fluid is discharged from the discharge port.

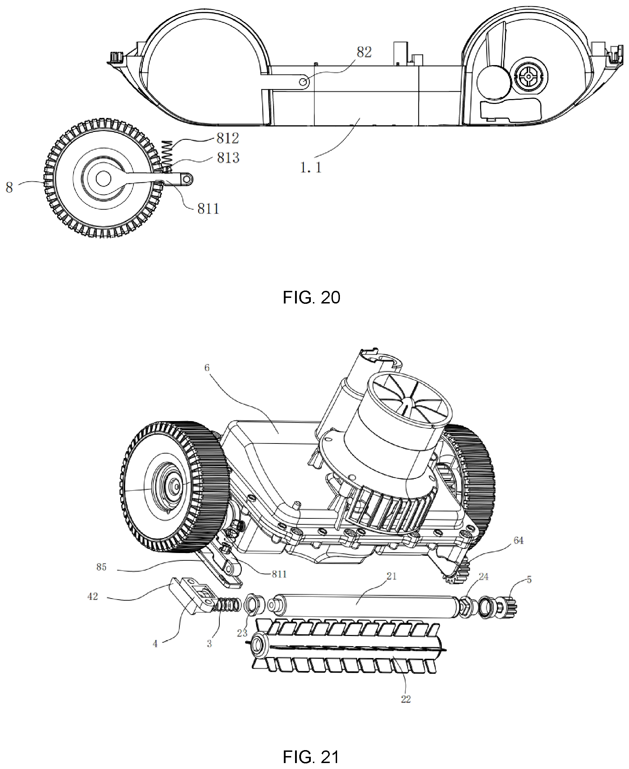

In other embodiments, as shown in FIG. 1 and FIG. 20, the drive wheels specifically include driving wheels 61 and driven wheels 65. The driving wheels 61 are located in the rear half of the main body 1, and the driven wheels 65 are located in the front half of the main body 1. The drive device 6 is located in the rear half of the main body 1 and includes a drive motor. The driving wheels 61 are driven to rotate by the drive device 6. Specifically, the drive wheels include two driving wheels 61 and two driven wheels 65, so that the main body 1 is driven by the driving wheels 61 during movement. The traveling wheel 8 does not undertake traveling drive work of the cleaning robot, and the traveling wheel 8 is located between the two driving wheels 61. This arrangement is adopted because the driving wheels 61 are located in the rear half of the main body 1, and the corresponding drive device 6 is also located in the rear half of the main body 1. The drive device 6 is arranged opposite to the driving wheels 61, so that the rear half of the main body 1 is relatively heavy and less susceptible to buoyancy, and this portion of the main body 1 is always kept in contact with the ground. The traveling wheel 8 can therefore always maintain stable contact with the ground, thereby ensuring an effect of detecting obstacles or walls.

The number of drive wheels can be set as needed and is not limited to a configuration having both driving wheels and driven wheels. In actual use, the drive wheel may be only a driving wheel or only a driven wheel, and the traveling wheel 8 is located near the drive wheel.

Preferably, the obstacle monitoring mechanism of the present application uses a Hall sensor and a design with a magnetic member provided on the traveling wheel 8. In this way, the Hall sensor can determine whether the traveling wheel 8 is rotating by sensing the magnetic member on the traveling wheel 8. The Hall sensor is a sensor capable of detecting a change in a magnetic field and usually includes a Hall element and a signal processing circuit. When the magnetic member moves with rotation of the traveling wheel 8, the Hall sensor senses a change in the magnetic field and generates a corresponding electrical signal. By monitoring and analyzing the electrical signal, the system can determine whether the traveling wheel 8 is rotating. This design enables real-time monitoring of a rotation state of the traveling wheel 8, thereby helping the cleaning robot identify obstacles or other abnormal movement states and make corresponding control and adjustment, so as to ensure safety and normal operation of the cleaning robot. This method can effectively monitor the rotation state of the traveling wheel 8 and improve intelligence and reliability of the obstacle monitoring mechanism.

In the present application, the traveling wheel 8 remains in constant contact with the ground and rotates during obstacle detection. Even when significant ground undulations are encountered, the main body 1 continues to move forward, and the traveling wheel 8 does not stop rotating. The operation state of the traveling wheel 8 is continuously monitored by the sensor until the cleaning robot encounters an obstacle or contacts a wall. At this time, the main body 1 stops moving, and the traveling wheel 8 stops rotating, indicating that the cleaning robot has encountered an obstacle or contacted a wall. This avoids inaccurate measurement results that may occur when a contact sensor, an ultrasonic sensor or an infrared sensor is affected by extreme lighting or soundwave reflection conditions, which may lead to unstable navigation of the robot. The obstacle monitoring mechanism is less affected by environmental conditions, so obstacle detection is more stable and efficient. In addition, the obstacle monitoring mechanism of the present application has advantages such as a simple structure, easy installation and a low probability of false triggering or damage.

In an embodiment, an obstacle signal output by the obstacle monitoring mechanism can be used to control one or more of driving of the cleaning robot and a water spraying amount.

This structural design enables the cleaning robot to perceive the surrounding environment in real time based on sensor signals and intelligently control rotation of the drive wheel 61 through the control module, so as to adapt to various working scenarios and task requirements. Meanwhile, through signal connection between the control module and the drive device 6, the cleaning robot can achieve precise direction control and flexible movement, thereby improving motion performance and operation intelligence. A long receiving groove 11 is provided at the bottom of the main body 1 and is recessed by a certain depth toward the inside of the main body 1. The receiving groove 11 is spatially adjacent to the suction port 12, and a certain distance is provided between the suction port 12 and the receiving groove 11. The roller brush 2 is provided in the receiving groove 11, and two ends of the roller brush 2 rotatably pass through two ends of the receiving groove 11 along a length direction of the receiving groove 11. The drive device 6 transmits power to the roller brush 2, so that the roller brush 2 continuously rotates during operation and lifts dirt from the cleaning surface. The lifted dirt is collected by the receiving groove 11 and temporarily enters the receiving groove 11. The receiving groove 11 provides a certain space for collecting dirt, thereby avoiding a problem that dirt is not removed in time by the suction port 12 and remains in place or overflows. Furthermore, the first guide surface 13 is provided between an opening of the receiving groove 11 and the suction port 12. The first guide surface 13 is a streamlined surface extending from the opening of the receiving groove 11 to the suction port 12. The streamlined shape satisfies fluid-flow requirements, enables fluid to enter the suction port 12 from the receiving groove 11 with low resistance, guides the fluid to flow into the suction port 12, and achieves a converging effect.

Furthermore, in combination with the above structure, in some embodiments, an optimized design is also provided at the bottom of the main body 1. To facilitate cleaning by the cleaning robot when the cleaning robot moves forward and backward in both directions, the first flow-facing side 14 and the second flow-facing side 15 are provided at the bottom of the main body 1. The first flow-facing side 14 and the second flow-facing side 15 are respectively located on one side and another side in a traveling direction of the main body 1 and are opposite to each other. The first flow-facing side 14 is adjacent to the receiving groove 11, and the second flow-facing side 15 is adjacent to the suction port 12. The second guide surface 16 is provided between the first flow-facing side 14 and the receiving groove 11, and the third guide surface 17 is provided between the second flow-facing side 15 and the suction port 12. Both the second guide surface 16 and the third guide surface 17 are streamlined. This design reduces resistance when the robot moves in two directions and makes dirt easier to suck up.

Furthermore, in combination with the above structure, in some embodiments, a plurality of grid plates 18 may be provided on the first guide surface 13, the second guide surface 16 and the third guide surface 17. A length direction of the grid plates 18 extends from the first flow-facing side 14 to the second flow-facing side 15. The arrangement of the grid plates 18 does not obstruct movement of the robot. Meanwhile, the grid plates 18 form guide channels that can guide fluid, such as air, to the suction port 12, enhance the cleaning effect, reduce resistance and improve operation efficiency of the robot. In addition, for a water cleaning robot, the grid plates 18 can also leave a gap between a bottom wall and a pool wall, thereby avoiding a problem that the machine is sucked against the pool wall and cannot move at a water outlet. This greatly reduces energy consumption and waste of the machine and improves cleaning efficiency.

The structure of the roller brush 2 is relatively common in the related art, but the present application provides a unique design for the roller brush 2. Several embodiments of the roller brush 2 are described in detail below.

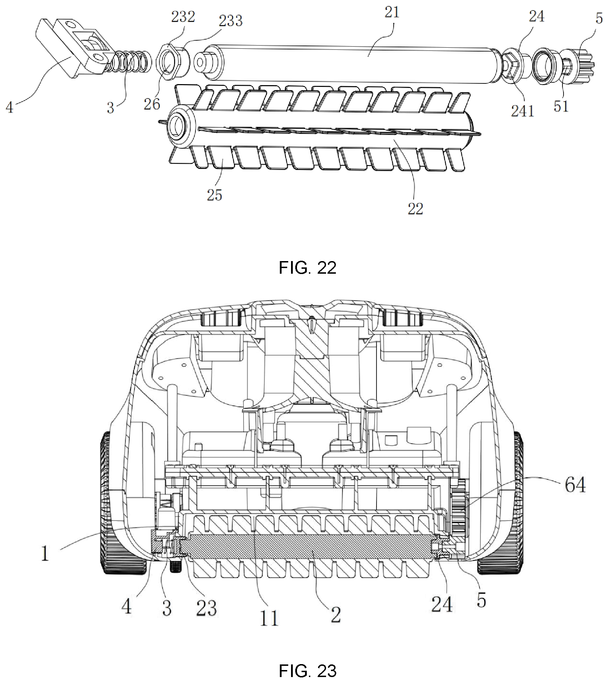

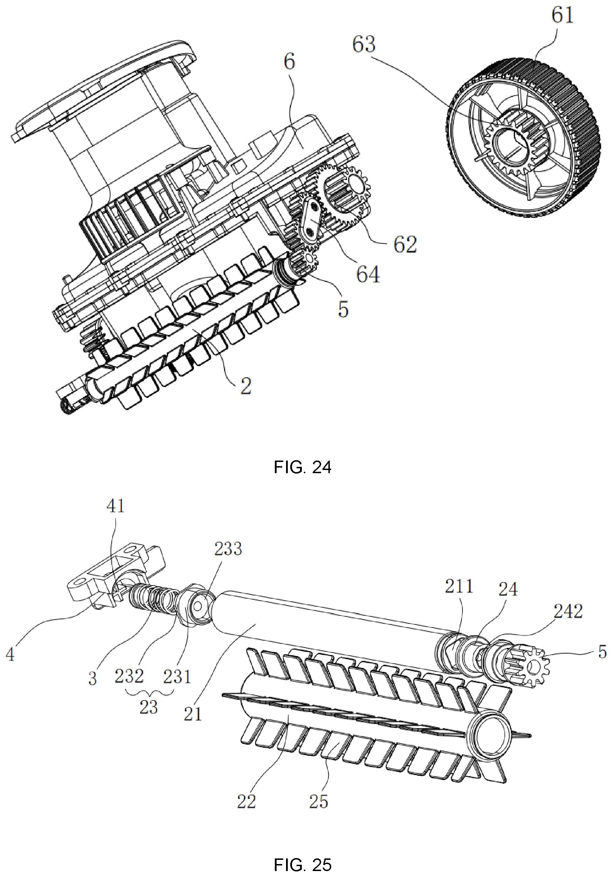

In a basic embodiment of the roller brush, referring to FIG. 21 to FIG. 25, the roller brush 2 includes a rotating shaft 21, a brush sleeve 22, a rotating end sleeve 23 and a transmission end sleeve 24. The rotating shaft 21 is an elongated shaft used to support and fix other components of the roller brush 2. The brush sleeve 22 is sleeved on the rotating shaft 21. The brush sleeve 22 may be made of soft silicone, rubber, polyamide fiber or another material. Brush bristles 25 are provided on a surface of the brush sleeve 22 for cleaning. The rotating end sleeve 23 is mounted inside the main body 1 and is opposite to one end of the receiving groove 11. The rotating end sleeve 23 is mounted at one end of the rotating shaft 21 to support rotation of the rotating shaft 21. The transmission end sleeve 24 is also mounted inside the main body 1. Another end of the rotating shaft 21 is fixedly connected to the transmission end sleeve 24. The transmission end sleeve 24 is also connected to the drive device 6 for transmission. The drive device 6 is used to provide rotational power and transmit the rotational power to the roller brush 2 to rotate the roller brush 2. The brush bristles 25 on the brush sleeve 22 contact the ground or another surface during rotation, thereby performing cleaning.

This design has the following advantages. The rotating end sleeve 23 and the transmission end sleeve 24 allow the roller brush 2 to rotate stably without shaking or jamming. The roller brush 2 can maintain a stable cleaning effect during operation, thereby avoiding gaps and dead corners. The transmission connection between the transmission end sleeve 24 and the drive device 6 effectively transmits power to the roller brush 2, thereby improving transmission efficiency. In addition, in this embodiment, the rotating shaft 21 and the brush sleeve 22 are mounted in the receiving groove 11, while the transmission end sleeve 24 and the drive device 6 are both located inside the main body 1, thereby effectively isolating the brush sleeve 22 from the transmission structure and preventing brush bristles 25 from tangling or winding, so as to reduce a risk of damage to the roller brush 2 or the cleaning robot.

In a further optimized embodiment of the roller brush, in practical applications, the roller brush of the cleaning robot needs to be cleaned and maintained regularly to ensure normal operation. Based on the technical solution of the basic embodiment, the structure of the roller brush 2 is designed for quick disassembly in this embodiment. A specific implementation is as follows. The rotating end sleeve 23 includes two parts, namely a shaft support 231 and a retaining ring 232. The shaft support 231 is a column that passes through a side wall of the main body 1 and extends toward an end of the receiving groove 11. The retaining ring 232 is locked inside the main body 1. A circular rotating groove 233 is provided on the shaft support 231 for insertion of the rotating shaft 21. Inserting the rotating shaft 21 enables the rotating end sleeve 23 to be quickly connected to the rotating shaft 21. The circular rotating groove 233 can provide good support and rotation for the rotating shaft 21.

The retaining ring 232 is fixed to an inner wall of the main body 1 by an elastic connection. A direction of the elastic connection is consistent with the axial direction of the rotating shaft 21. In this way, the rotating end sleeve 23 can be compressed by a certain distance toward the inside of the main body 1, thereby providing sufficient space for mounting the rotating shaft 21. Another end of the rotating shaft 21 is detachably fixed to the transmission end sleeve 24 by, for example, a snap-fit connection, a threaded connection or a pin connection. The rotating shaft 21 and the transmission end sleeve 24 can be quickly disassembled and assembled by compressing and resetting the rotating end sleeve 23.

Specifically, an elastic telescopic component 3 and a pressure cap 4 are further provided inside the main body 1. The pressure cap 4 is fixedly connected to the inner wall of the main body 1 by a pin to ensure stability of the overall structure of the robot. The elastic telescopic component 3 is connected between the pressure cap 4 and the rotating end sleeve 23 and performs elastic adjustment. Correspondingly, the pressure cap 4 and/or the rotating end sleeve 23 are provided with positioning structures for limiting the spring, such as protrusions 41 or grooves 26. The positioning structures ensure that the spring is limited at a suitable position, thereby ensuring stable and reliable connection between the rotating end sleeve 23 and the spring. In this embodiment, a cross-shaped protrusion 41 is provided on the pressure cap 4, and a groove 26 is provided on the rotating end sleeve 23. It can be understood that providing a groove 26 on the pressure cap 4 and a cross-shaped protrusion 41 on the rotating end sleeve 23 can achieve a similar effect, and details are not repeated herein.

In addition, the pressure cap 4 is provided with an extension plate 41 for cooperating with the pin 82 of the rocker arm 811. Specifically, the extension plate 42 abuts against an end of the pin 82, thereby preventing the pin 82 from coming off.

It should be noted that, in other embodiments, there may be many ways to implement elastic movement of the rotating end sleeve 23 in the receiving groove 11 in the axial direction of the rotating shaft 21, and those ways are not enumerated herein. Existing elastic telescopic structures, such as elastic metal pressing plates and torsion springs, that can be directly used for elastic connection between the rotating end sleeve 23 and the inner wall of the main body 1 can be included in the solution of this embodiment.

In a still further optimized embodiment of the roller brush, in actual use, the cleaning robot needs to drive the driving wheel to move. The driving wheel may be driven by a transmission mechanism such as a belt, a gear or a chain. A drive motor may drive rotation of the driving wheel directly through the transmission mechanism. In this embodiment, a synchronous drive manner is adopted. While the drive motor controls rotation of the driving wheel, the drive motor also drives the roller brush 2 to rotate synchronously. This one-to-two manner can greatly improve working efficiency, reduce robot cost and improve space utilization.

Specifically, a transmission gear 5 is provided at another end of the transmission end sleeve 24 distant from the rotating shaft 21. That is, the transmission end sleeve 24 not only serves as a rotation support, but also has a power transmission function. The rotating shaft 21, the transmission end sleeve 24 and the transmission gear 5 are fixedly connected to ensure that they operate together. To achieve detachable connection, a non-circular snap-fit body 241 is provided on one side of the transmission end sleeve 24, and a shaft end slot 211 matched with the snap-fit body 241 is provided at an end of the rotating shaft 21. With this design, the transmission end sleeve 24 can be fixed on the rotating shaft 21 by insertion and snap-fit, thereby achieving stable connection and transmission. A sleeve end slot 242 is provided on another side of the transmission end sleeve 24, and a non-circular snap post 51 matched with the sleeve end slot 242 is provided on the transmission gear 5. This design ensures that connection between the transmission end sleeve 24 and the transmission gear 5 is tight and reliable.

The drive device 6 is provided inside the main body 1. The drive device 6 provides power to a transmission part of the robot. In this embodiment, the drive device 6 is mainly used to provide rotation of the driving wheel and rotation of the roller brush 2. The driving wheel includes the driving wheel 61, which is used to provide traction and push the robot to move. A drive gear 62 is provided at an output end of the drive device 6, and a driven gear 63 is provided on the driving wheel 61. The two gears mesh with each other to transmit torque and rotational power.

Meanwhile, the drive gear 62 and the transmission gear 5 are also connected by a gear set 64. When the drive gear 62 rotates, the gear set 64 transmits force to the transmission gear 5, thereby driving the roller brush 2 to rotate. This transmission manner further improves transmission efficiency and reliability and makes power transmission smoother and more stable. Furthermore, the gear set 64, which includes a plurality of meshing gears of different sizes, forms a structure similar to a gearbox. Through power transmission of the gear set 64, a rotational speed of the transmission gear 5 can be changed to better match a rotational speed of the roller brush 2. In addition, this embodiment requires that power transmission of the gear set 64 also ensure that the driven gear 63 and the transmission gear 5 rotate in the same direction. That is, their gear tooth profiles and the rotation directions are consistent with each other to ensure correct operation of the transmission. Ensuring that the driven gear 63 and the transmission gear 5 rotate in the same direction ensures that the roller brush 2 and the robot travel in the same direction. When the roller brush 2 and the robot travel in the same direction, rotation of the roller brush 2 can be closely coordinated with a forward direction of the robot, thereby improving cleaning effect or movement efficiency of the robot. Moreover, when the roller brush 2 and the robot travel in the same direction, the robot is more stable during cleaning or movement. Coordinated operation of the roller brush 2 and the robot prevents the rotation direction of the roller brush 2 from changing or flipping during movement, thereby improving stability and controllability of the robot.

The roller brush 2 is located between the filter device and the drive device in a horizontal projection.

It can be understood that the drive device may be a component that drives the drive wheel, a pumping component or a battery pack. In summary, the roller brush 2 is located at a substantially central region of the bottom of the main body 1.

In summary, the water cleaning robot switches its traveling direction by controlling forward and reverse rotation of the drive device 6 through the control module. When the cleaning robot encounters an obstacle or contacts a wall during movement, the traveling wheel 8 stops rotating. This signal is detected by the sensor and is promptly transmitted to the control module. The control module then sends a control command to the drive device 6 based on the signal. The drive device 6 is then controlled to rotate in reverse according to the signal. At this time, the driven gear 63 correspondingly rotates in reverse, thereby causing the driving wheel 61 to rotate in reverse. The robot then promptly changes the traveling direction and continues to clean remaining areas, thereby avoiding inaccurate monitoring or misjudgment and improving operation efficiency of the cleaning robot.

Meanwhile, in the embodiments of the present application, rotation of the roller brush 2 is also driven by the drive device 6. When the drive device 6 changes direction, the roller brush 2 also synchronously changes its rotation direction, so that the driven gear 63 and the transmission gear 5 rotate in the same direction, thereby ensuring that the roller brush 2 and the robot travel in the same direction. When the roller brush 2 and the robot travel in the same direction, rotation of the roller brush 2 can be closely coordinated with a forward direction of the robot, thereby improving cleaning effect or movement efficiency of the robot. Furthermore, when the roller brush 2 and the robot travel in the same direction, the robot is more stable during cleaning or movement. The roller brush 2 and the robot work in coordination to prevent the rotation direction of the roller brush 2 from changing or flipping during movement, thereby improving stability and controllability of the robot.

The present application further provides a control method for a water cleaning robot. The core control method includes using the sensor to continuously monitor the motion state of the traveling wheel 8. When the sensor detects that the traveling wheel 8 has stopped rotating, the drive device 6 is controlled to rotate in reverse, so that the cleaning robot changes its traveling direction. Furthermore, the control module can control speeds of left and right driving wheels to steer the robot. For example, when the left driving wheel rotates at a low speed and the right driving wheel rotates at a high speed, the robot turns left, and vice versa. Based on the simple and efficient obstacle monitoring mechanism of the present application, the traveling direction of the water cleaning robot can be efficiently controlled, misjudgment is reduced, and cleaning efficiency of the robot is greatly improved.

In addition, the control device can not only control forward and reverse rotation of the cleaning robot, but also change other working states of the cleaning robot. For example, a pumping device is also provided in the sewage discharge channel inside the main body 1. The pumping device generates negative pressure to cause water to flow in the sewage discharge channel. When the obstacle monitoring mechanism detects that the traveling wheel 8 has stopped rotating, the control module can also control the pumping device to change a flow rate of fluid flowing out of the discharge port and/or a discharge direction of the fluid at the discharge port. For a specific control solution, reference may be made to another patent application No. 202310173492.3. The control solution for the flow rate and discharge direction at the discharge port in that patent application is also incorporated into the disclosure of the present application and is not repeated herein. In summary, the sensor continuously monitors the motion state of the traveling wheel 8. When the sensor detects that the traveling wheel 8 has stopped rotating, the water cleaning robot responds by performing at least one of: (I) changing a traveling direction, (II) changing the flow rate of the fluid flowing out of the discharge port, and (III) changing the discharge direction of the fluid at the discharge port.

The foregoing description of the embodiments is intended to enable those skilled in the art to understand and apply the technology of the present application. Those skilled in the art can readily make various modifications to these embodiments and apply the general principles described herein to other embodiments without creative efforts. Therefore, the present application is not limited to the embodiments described above. Modifications in the following situations should fall within the patent scope of the present application: (1) a new technical solution implemented based on the technical solution of the present application and combined with existing common knowledge, where technical effects of the new technical solution do not exceed the technical effects of the present application; (2) equivalent substitution of some features of the technical solution of the present application using known technology, resulting in the same technical effects as those of the present application; (3) an extendable technical solution based on the technical solution of the present application, where substantive content of the extendable technical solution does not exceed the technical solution of the present application; and (4) equivalent transformations made using the contents of the specification and drawings, directly or indirectly applied to other related technical fields.

## Claims

1. A water cleaning robot, **characterized by** comprising: a main body (1); a sewage discharge channel provided in the main body (1); a negative pressure generating device (66) provided in the sewage discharge channel; a suction port (12) located at a bottom of the main body (1) and provided at one end of the sewage discharge channel; a discharge port (101) located at a top of the main body (1) and provided at another end of the sewage discharge channel; a traveling wheel (8) provided at the bottom of the main body (1); an elastic pressing assembly (81) configured to press the traveling wheel (8) downward; and a sensor configured to detect a motion state of the traveling wheel (8).

2. The water cleaning robot according to claim 1, further comprising a filter basket assembly, wherein the filter basket assembly comprises a filter basket (71) having an opening (712); and a flip cover (72), the flip cover (72) and the filter basket (71) are pivotally connected by a locking module (73), and the flip cover (72) and the filter basket (71) are locked by a cover latch module (76).

3. The water cleaning robot according to claim 2, wherein the locking module (73) comprises a first buckle (731) and a limiting block (732), and the limiting block (732) and the first buckle (731) are detachably mounted on the filter basket (71), such that the locking module (73) is fixed relative to the filter basket (71).

4. The water cleaning robot according to claim 2, wherein the cover latch module (76) comprises a second buckle (761), a pressing plate (762) and a support plate (763), the flip cover (72) is provided with a latch portion (721) engaged with and fixed to the cover latch module (76), the pressing plate (762) is engaged with the latch portion (721), and the support plate (763) is elastic and configured to connect the second buckle (761) and the pressing plate (762).

5. The water cleaning robot according to claim 2, wherein a detachable handle (74) is provided at a top of the flip cover (72), the flip cover (72) has a recess (75) on a side opposite to the handle (74), two ends of the recess (75) are provided with slots (751), two ends of the handle (74) are provided with inserts (741), and the inserts (741) are engaged and fixed in the slots (751).

6. The water cleaning robot according to claim 2, wherein the filter basket (71) is further provided with an inlet (713), a baffle (77) is provided at the inlet (713), the baffle (77) is hinged to the filter basket (71) and abuts against an inner side of the inlet (713), and an elastic reset member (78) is provided between the baffle (77) and the filter basket (71), the elastic reset member (78) applies an elastic force to the baffle (77) toward the inlet (713) so that the baffle (77) abuts against the inner side of the inlet (713).

7. The water cleaning robot according to claim 1, wherein at least two wheels are provided at the bottom of the main body (1) to drive the main body (1) to travel, and the traveling wheel (8) is provided between two of the at least two wheels; or at least one of the at least two wheels is the traveling wheel (8).

8. The water cleaning robot according to claim 1, wherein the elastic pressing assembly (81) comprises a rocker arm (811) and an elastic member (812), the rocker arm (811) is hinged and fixed to the main body (1), the traveling wheel (8) is rotatably provided on the rocker arm (811), the elastic member (812) is configured to provide a force for keeping the traveling wheel (8) pressed downward, and two ends of the elastic member (812) respectively abut against the rocker arm (811) and the main body (1).

9. The water cleaning robot according to claim 1, wherein the sensor is a Hall sensor, the traveling wheel (8) is provided with a magnetic member, and the Hall sensor senses, through the magnetic member, whether the traveling wheel (8) is rotating.

10. The water cleaning robot according to claim 1, wherein the bottom of the main body (1) is further provided with a receiving groove (11) and the suction port (12) adjacent to the receiving groove (11), the receiving groove (11) is provided with a roller brush (2), and a streamlined first guide surface (13) is provided between a groove opening of the receiving groove (11) and the suction port (12).

11. The water cleaning robot according to claim 10, wherein the bottom of the main body (1) comprises a first flow-facing side (14) and a second flow-facing side (15) opposite to each other, the first flow-facing side (14) is adjacent to the receiving groove (11), a streamlined second guide surface (16) is provided between the first flow-facing side (14) and the receiving groove (11), the second flow-facing side (15) is adjacent to the suction port (12), and a streamlined third guide surface (17) is provided between the second flow-facing side (15) and the suction port (12).

12. The water cleaning robot according to claim 10, wherein at least one of the first guide surface (13), the second guide surface (16) and the third guide surface (17) is provided with a plurality of grid plates (18), and a length direction of the grid plates (18) extends from the first flow-facing side (14) to the second flow-facing side (15).

13. The water cleaning robot according to claim 10, wherein the first guide surface (13) is provided with a plurality of grid plates (18) substantially perpendicular to a length direction of the suction port (12), and a ratio of a distance between adjacent grid plates (18) to a length of the suction port (12) is in a range of 0.15 to 0.25.

14. The water cleaning robot according to claim 10, wherein the receiving groove (11) accommodates the roller brush (2), the roller brush (2) comprises a rotating shaft (21), a rotating end sleeve (23) and a transmission end sleeve (24), the rotating end sleeve (23) and the transmission end sleeve (24) are respectively provided at two ends of the receiving groove (11), one end of the rotating shaft (21) is rotatably connected to the rotating end sleeve (23), and another end of the rotating shaft (21) is fixedly connected to the transmission end sleeve (24).

15. The water cleaning robot according to claim 14, wherein the rotating end sleeve (23) is elastically and telescopically provided in the receiving groove (11) in an axial direction of the rotating shaft (21), and the transmission end sleeve (24) is detachably fixed to the rotating shaft (21).

16. The water cleaning robot according to claim 14, wherein the main body (1) is provided with a drive device (6), another end of the transmission end sleeve (24) distant from the rotating shaft (21) is provided with a transmission gear (5) in transmission connection with the drive device (6), and the rotating shaft (21), the transmission end sleeve (24) and the transmission gear (5) are fixedly connected.

17. The water cleaning robot according to claim 2, wherein the locking module (73) and the cover latch module (76) are made of non-metallic materials.
